# EUROPEAN PATENT APPLICATION

(11) **EP 4 571 321 A1**
(43) Date of publication of application: **18.06.2025**
(21) Application number: 23852357.5
(22) Date of filing: 25.07.2023
(51) Int. Cl.: G01N 35/10

(54) **AUTOMATIC ANALYSIS DEVICE AND METHOD FOR ADJUSTING AMOUNT OF CLEANING LIQUID**

(30) Priority: 09.08.2022 JP 2022126916
(71) Applicant: HITACHI HIGH-TECH CORPORATION, Tokyo 105-6409 (JP)
(72) Inventor: ETOH Jun, Tokyo 100-8280 (JP); TAKAHASHI Takuya, Tokyo 105-6409 (JP); OCHI Manabu, Tokyo 100-8280 (JP); SUZUKI Yoichiro, Tokyo 105-6409 (JP); KAWAHARA Tetsuji, Tokyo 105-6409 (JP); SAKATA Kenshiro, Tokyo 105-6409 (JP)
(74) Representative: Strehl & Partner mbB
(86) International application number: PCT/JP2023/027123
(87) International publication number: WO 2024/034381

(57) **Abstract**

The purpose of the present invention is to provide an automated analyzer and an adjustment method which are capable of accurately adjusting the liquid amount of a probe cleaner in a short time. To this end, the present invention is an automated analyzer which discharges, during cleaning of a dispensing probe, a reference amount of a probe cleaner from a cleaning nozzle while the tip of the dispensing probe is at a cleaning position. When setting, as a first adjustment position, a position which is lower than the cleaning position and at which the horizontal distance from the cleaning nozzle is greater than from the cleaning position, and a liquid contact is detected when the tip of the dispensing probe is present at the position and the reference amount of the probe cleaner is discharged, a control unit, upon adjusting the liquid amount of the probe cleaner discharges the probe cleaner while the tip of the dispensing probe is at the first adjustment position to confirm whether the liquid contact has been detected, discharges the probe cleaner while the tip of the dispensing probe is positioned above or downstream of the first adjustment position to confirm whether the liquid contact has been detected, and determines, on the basis of the confirmation results, the setting of a liquid amount adjustment means required for setting the liquid amount of the probe cleaner to the reference liquid amount.

## Description

### Technical Field

The present invention relates to an automated analyzer and a method of adjusting a liquid amount of probe cleaner.

### Background Art

In automated analyzers, after dispensing samples or the like, a dispensing probe is cleaned with a cleaning tank, thereby reliability of analysis is maintained. However, a liquid amount of probe cleaner is likely to change due to deterioration of a pump supplying the probe cleaner over time. Therefore, it is general for workers to periodically perform maintenance for adjusting the liquid amount of probe cleaners. Here, since manual adjustment is time-consuming and lead to variation, techniques for adjusting the liquid amount of probe cleaner have been proposed. For example, PTL 1 discloses an automated analyzer in which, when adjusting a liquid amount of probe cleaner, a liquid amount change means changes the liquid amount of probe cleaner in a state where a height of a tip of a dispensing probe is set to an upper end of a target cleaning range, and a reference liquid amount is updated with a liquid amount of probe cleaner at the time when the probe cleaner is detected by a probe cleaner detection means as an liquid amount of post-adjustment liquid (claim 1, Fig. 4, and the like of PTL 1). PTL 1 also discloses the automated analyzer in which a horizontal position of the dispensing probe is located further downstream of a cleaning nozzle than during cleaning of the dispensing probe when the liquid amount of probe cleaner is checked (claim 6, Fig. 10, and the like of PTL 1).

### Citation List

### Patent Literature

PTL 1: WO2021/112120A

### Summary of Invention

### Technical Problem

However, in the technique described in claim 1 and the like of PTL 1, since only the height of the dispensing probe is changed to adjust the liquid amount of probe cleaner in a state where the horizontal position of the dispensing probe is fixed to a cleaning position at which a change in the liquid amount of probe cleaner is hardly affected, accuracy of the adjustment is not high. In the technique described in claim 6 and the like of PTL 1, the dispensing probe gradually descends from a reference height at which no probe cleaner is detected and a liquid amount is checked based on a descending distance until detection of the probe cleaner. Therefore, it requires time to check the liquid amount, and takes time for adjustment.

An object of the present invention is to provide an automated analyzer and an adjustment method capable of adjusting a liquid amount of probe cleaner accurately in a short time.

### Solution to Problem

To solve the above-described problem, in an automated analyzer according to an aspect of the present invention, during cleaning of a dispensing probe, a reference liquid amount of probe cleaner is ejected from a cleaning nozzle in a state where a tip of the dispensing probe is at a cleaning position. In a case where a first adjustment position is a position at which a horizontal distance from the cleaning nozzle is more distant than the cleaning position, which is lower than the cleaning position, and at which a probe cleaner detection means detects a liquid contact during ejection of the reference liquid amount of probe cleaner from the cleaning nozzle when the tip of the dispensing probe is at the position, in the adjustment of the liquid amount of probe cleaner, after the control unit ejects the probe cleaner from the cleaning nozzle to check whether the liquid contact is detected in a state where the tip of the dispensing probe is at the first adjustment position, the control unit ejects the probe cleaner from the cleaning nozzle to check whether the liquid contact is detected in a state where the tip of the dispensing probe is at a position above the first adjustment position or a position at which the horizontal distance from the cleaning nozzle is more distant than the first adjustment position, and the control unit determines a setting of a liquid amount adjustment means required to set the liquid amount of probe cleaner to the reference liquid amount based on a check result.

### Advantageous Effects of Invention

According to the present invention, it is possible to provide an automated analyzer and an adjustment method capable of adjusting a liquid amount of probe cleaner accurately in a short time.

### Brief Description of Drawings

[Fig. 1] Fig. 1 is a schematic configuration diagram illustrating an automated analyzer according to an embodiment.
[Fig. 2] Fig. 2 is a schematic configuration diagram illustrating a supply path of a probe cleaner in the automated analyzer according to the embodiment.
[Fig. 3] Fig. 3 is a flowchart illustrating a method of adjusting a liquid amount of probe cleaner in an automated analyzer according to Example 1.
[Fig. 4] Fig. 4 is a diagram illustrating a cleaning position and a liquid amount adjustment position of a dispensing probe.
[Fig. 5] Fig. 5 is a diagram illustrating a change in a trajectory of a probe cleaner when a liquid amount adjustment means increases a liquid amount of probe cleaner in a state where a tip of the dispensing probe is held at a first adjustment position.
[Fig. 6] Fig. 6 is a diagram illustrating a state (left) where the tip of the dispensing probe is at the first adjustment position and a state (right) where the dispensing probe is raised until a liquid level is not detected.
[Fig. 7] Fig. 7 is a diagram illustrating an example of each boundary line serving as a reference for distinguishing a degree of liquid contact.
[Fig. 8] Fig. 8 is a degree-of-liquid contact table showing an example of a correspondent relation between a liquid amount state and liquid contact presence or absence information in each boundary line illustrated in Fig. 7.
[Fig. 9] Fig. 9 is a graph illustrating a relation between a movement amount until liquid contact is not made and an increase or decrease amount necessary for setting a probe cleaner to a reference liquid amount.
[Fig. 10] Fig. 10 is a flowchart illustrating a method of adjusting a liquid amount of probe cleaner in an automated analyzer according to Example 3.
[Fig. 11] Fig. 11 is a diagram illustrating a state (upper) where the tip of a dispensing probe is at a first adjustment position and a state (lower) where the dispensing probe is away from a cleaning nozzle until a liquid level is not detected.
[Fig. 12] Fig. 12 is a flowchart illustrating a method of adjusting a liquid amount of probe cleaner in an automated analyzer according to Example 4.
[Fig. 13] Fig. 13 is a flowchart illustrating a process in an error for an insufficient liquid of probe cleaner in an automated analyzer according to Example 5.

### Description of Embodiments

Embodiments of the present invention will be described in detail with reference to the drawings.

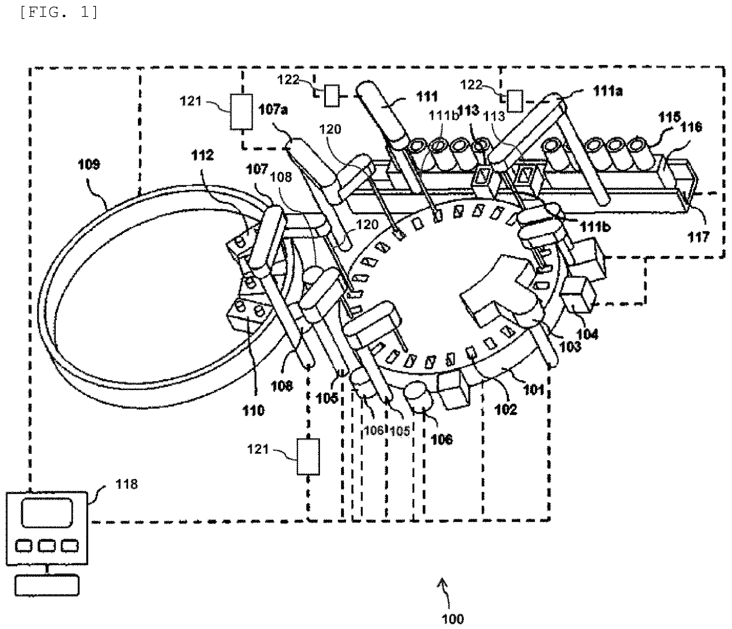

Fig. 1 is a schematic configuration diagram illustrating an automated analyzer according to an embodiment. An automated analyzer 100 is a device that measures a reactive liquid subjected to a chemical reaction inside a reaction container 102 and performs component analysis. The automated analyzer 100 incudes a reaction disc 101, a cleaning mechanism 103, a spectrophotometer 104, an agitation mechanism 105, a cleaning tank 106, a first reagent dispensing mechanism 107, a second reagent dispensing mechanism 107a, a cleaning tank 108, a reagent disc 109, a first sample dispensing mechanism 111, a second sample dispensing mechanism 111a, a cleaning tank 113, a sample transport mechanism 117, and a controller 118 as main configurations. The first reagent dispensing mechanism 107, the second reagent dispensing mechanism 107a, the first sample dispensing mechanism 111, and the second sample dispensing mechanism 111a have a liquid level detection function.

In the reaction disc 101, reaction containers 102 are arranged in a circumferential form. The reaction container 102 is a container that contains a mixed liquid in which a sample and a reagent are mixed. The plurality of reaction containers 102 are arranged on the reaction disc 101. The sample transport mechanism 117 that transports a sample rack 116 on which sample containers 115 are mounted is disposed at a location close to the reaction disc 101.

The first sample dispensing mechanism 111 and the second sample dispensing mechanism 111a that can rotate and move up and down are disposed between the reaction disc 101 and the sample transport mechanism 117, and each include a sample dispensing probe 111b. A sample syringe 122 is connected to each sample dispensing probe 111b. The sample dispensing probe 111b moves horizontally while rotating in an arc form about a rotational axis and moves up and down to dispense a sample from the sample container 115 to the reaction container 102.

The reagent disc 109 is a depository in which a plurality of reagent bottles 110 storing reagents, detergent bottles 112, or the like are placed in a circumferential form. The reagent disc 109 is kept cool.

The first reagent dispensing mechanism 107 and the second reagent dispensing mechanism 107a that can rotate and move up and down are provided between the reaction disc 101 and the reagent disc 109, and each include a reagent dispensing probe 120. The reagent dispensing probe 120 is moved up, down, and horizontally by the first reagent dispensing mechanism 107 or the second reagent dispensing mechanism 107a. A reagent syringe 121 is connected to each reagent dispensing probe 120. The reagent syringe 121 dispenses a reagent, detergent, a diluted solution, a preprocessing reagent, or the like sucked from the reagent bottle 110, a detergent bottle 112, a diluted solution bottle, a preprocessing reagent bottle, or the like to the reaction container 102 via the reagent dispensing probe 120.

The cleaning mechanism 103 that cleans the inside of the reaction container 102, the spectrophotometer 104 that measures absorbance of light passing through the mixed liquid in the reaction container 102, and the agitation mechanism 105 that mixes sample and a reagent dispensed to the reaction container 102, and the like are disposed around the reaction disc 101.

The cleaning tank 108 for the reagent dispensing probe 120 is disposed on an operation range of the first reagent dispensing mechanism 107 or the second reagent dispensing mechanism 107a, the cleaning tank 113 for the sample dispensing probe 111b is disposed on an operation range of the first sample dispensing mechanism 111 or the second sample dispensing mechanism 111a, and the cleaning tank 106 for the agitation mechanism 105 is disposed on an operation range of the agitation mechanism 105.

Each mechanism is connected to the controller 118 and an operation of each mechanism is controlled by the controller 118. The controller 118 that is a control unit is configured with a computer or the like, controls the operation of each of the above-described mechanisms in the automated analyzer, and performs a calculation process of obtaining a concentration of a predetermined component in a liquid sample such as blood or urine.

An analysis process for a test sample by the above-described automated analyzer 100 is performed in accordance with the following order. First, the sample in the sample container 115 placed on the ample rack 116 transported to the vicinity of the reaction disc 101 by the sample transport mechanism 117 is dispensed to the reaction container 102 on the reaction disc 101 by the sample dispensing probes 111b of the first sample dispensing mechanism 111 and the second sample dispensing mechanism 111a. Subsequently, a reagent used for analysis is dispensed to the reaction container 102 to which the sample has first been dispensed by the first reagent dispensing mechanism 107 or the second reagent dispensing mechanism 107a from the reagent bottle 110 on the reagent disc 109. Subsequently, the agitation mechanism 105 performs agitating of a mixed liquid of the sample and the reagent inside the reaction container 102.

Thereafter, light generated from a light source is transmitted through the reaction container 102 in which the mixed liquid is input, and an intensity of the transmitted light is measured by the spectrophotometer 104. The intensity measured by the spectrophotometer 104 is transmitted to the controller 118 via an A/D converter and an interface. Then, the controller 118 performs calculation to obtain the concentration of the predetermined component in the liquid sample such as blood or urine and displays a result on a display unit or the like (not illustrated). The automated analyzer that obtains the concentration of the predetermined component using the spectrophotometer 104 will be described as an example. Techniques disclosed in Examples to be described below may be used for an automatic immunological analysis device or an automatic coagulation analysis device that measures a sample using another photometer.

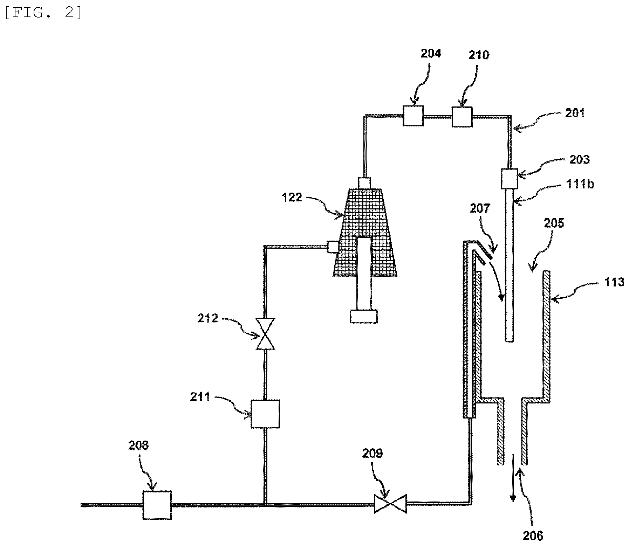

Fig. 2 is a schematic configuration diagram illustrating a supply path of a probe cleaner in the automated analyzer according to the embodiment. The sample dispensing probe 111b included in the sample dispensing mechanism is connected to a tube 201 forming a dispensing flow path via a nipple 203. The sample syringe 122 that sucks and ejects a sample is connected upstream of the dispensing flow path, and a pressure sensor 204 that detects a pressure in the flow path is provided on the way of the dispensing flow path from the sample syringe 122 to the sample dispensing probe 111b. A liquid level detector 210 that detects an electrostatic capacity of the sample dispensing probe 111b is connected to the sample dispensing mechanism. When a sample or a probe cleaner comes into contact with a tip of the sample dispensing probe 111b, the contact is detected in accordance with a change in the electrostatic capacity.

Further, the automated analyzer according to the embodiment includes the cleaning tank 113 that cleans the sample dispensing probe 111b and a probe cleaner supply pump 208 that supplies a probe cleaner from a tank (not illustrated). Here, the cleaning tank 113 includes an upper opening 205 through which the sample dispensing probe 111b passes when the sample dispensing probe 111b makes access for cleaning, a probe cleaner ejection port 207 (cleaning nozzle) ejecting the probe cleaner toward the outer surface of the accessed sample dispensing probe 111b, and a lower opening 206 through which the ejected probe cleaner is drained. A downstream side of the probe cleaner supply pump 208 is branched into two paths. One path serves an inner cleaning path for cleaning an inner surface of the sample dispensing probe 111b and the other path serves as an outer cleaning path for cleaning the outer surface of the sample dispensing probe 111b.

The inner cleaning path further includes a liquid feeding pump 211 that is a higher pressure pump than the probe cleaner supply pump 208. An inner cleaning solenoid valve 212 that opens and closes a flow path communicating with the liquid feeding pump 211 and the sample syringe 122 is provided downstream of the liquid feeding pump 211.

Meanwhile, an outer cleaning solenoid valve 209 that opens and closes a flow path communicating from the probe cleaner supply pump 208 to the probe cleaner ejection port 207 is provided in the outer cleaning path. The inner cleaning solenoid valve 212 and the outer cleaning solenoid valve 209 can perform opening and closing and change openness in accordance with an electric signal input from the controller 118. For example, when a predetermined current is applied to the outer cleaning solenoid valve 209, the outer cleaning solenoid valve 209 becomes predetermined openness and a predetermined liquid amount of probe cleaner is supplied downstream.

When the sample is dispensed, the dispensing flow path is filled with system water (pure water), and the sample is sucked or ejected by ejecting or sucking the system water inside the dispensing flow path by operating the sample syringe 122. Success or failure of the dispensing at this time is determined using pressure data detected by the pressure sensor 204. When the sample is dispensed, the inner cleaning solenoid valve 212 is closed.

Subsequently, when the inner surface of the sample dispensing probe 111b is cleaned, the probe cleaner supply pump 208 is operated to supply the probe cleaner to the liquid feeding pump 211. The liquid feeding pump 211 pressurizes the probe cleaner and feeds the pressurized probe cleaner downstream. The probe cleaner travels as the system water through the dispensing flow path to clean the inner surface of the sample dispensing probe 111b and is ejected inside the cleaning tank 113 from the tip of the sample dispensing probe 111b.

Meanwhile, when the outer surface of the sample dispensing probe 111b is cleaned, the probe cleaner supply pump 208 is operated and the outer cleaning solenoid valve 209 is opened to eject the probe cleaner from the probe cleaner ejection port 207 to the outer surface of the sample dispensing probe 111b.

Here, despite constant openness of the outer cleaning solenoid valve 209, a liquid amount of probe cleaner ejected from the probe cleaner ejection port 207 is likely not to reach a goal liquid amount (reference liquid amount) due to aging deterioration of the probe cleaner supply pump 208, a flow path clogging of the outer cleaning path, or the like. Therefore, it is important to periodically adjust the probe cleaner ejected from the probe cleaner ejection port 207 within a range of the reference liquid amount. For example, when the liquid amount of probe cleaner decreases during repeated outer cleaning, the controller 118 increases the liquid amount by increasing the openness of the outer cleaning solenoid valve 209. Hereinafter, a method of adjusting the liquid amount will be described specifically according to Embodiments 1 to 4. The adjusting of the liquid amount of probe cleaner means adjusting of a liquid amount per unit time ejected from the tip of the sample dispensing probe 111b.

### Example 1

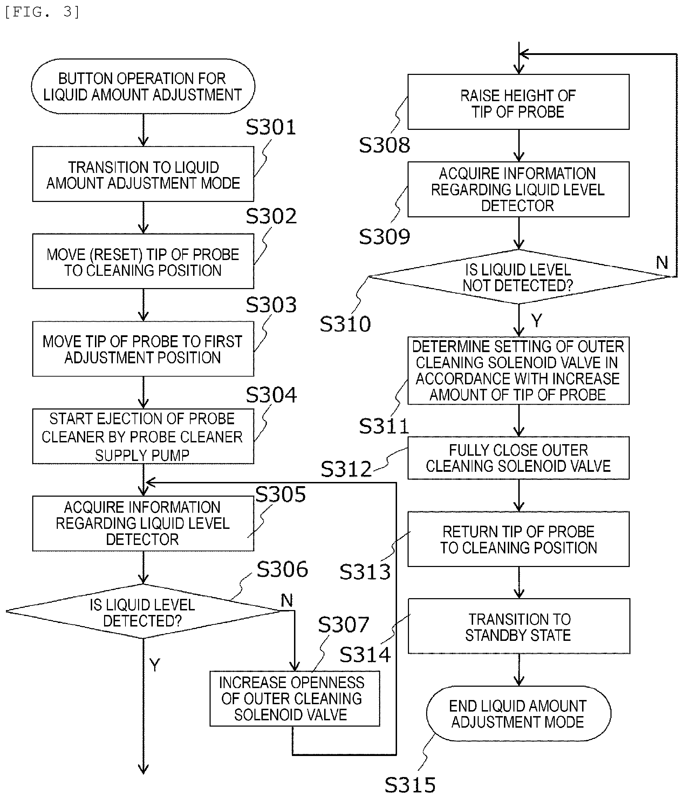

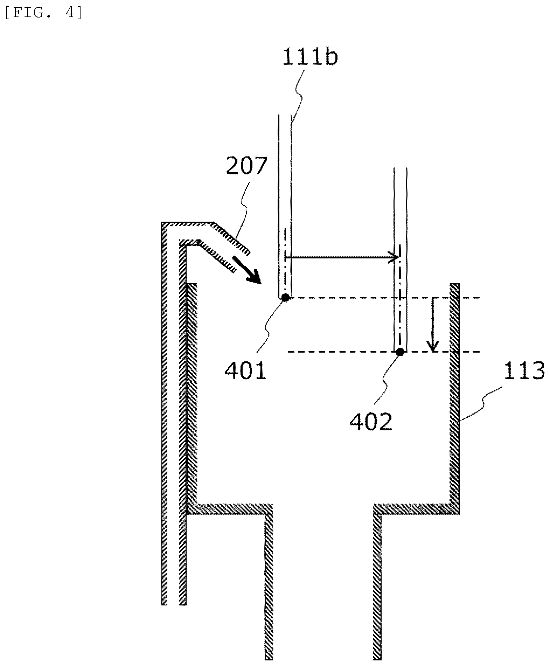

Example 1 will be described with reference to Figs. 3 to 6. Fig. 3 is a flowchart illustrating a method for adjusting a liquid amount of probe cleaner in an automated analyzer according to Example 1. Fig. 4 is a diagram illustrating a cleaning position and a liquid amount adjustment position of a dispensing probe.

First, when a button operation or the like of executing maintenance to adjust a liquid amount of probe cleaner of the sample dispensing probe 111b is performed, the controller 118 transitions to a liquid amount adjustment mode (step S301). Then, the controller 118 operates the first sample dispensing mechanism 111 to move the position of the tip of the sample dispensing probe 111b to a cleaning position 401 illustrated in Fig. 4 and reset the position of the sample dispensing probe 111b (S302). A normal cleaning operation of the sample dispensing probe 111b is performed in a state where the tip of the sample dispensing probe 111b is at the cleaning position 401.

Subsequently, the controller 118 operates the first sample dispensing mechanism 111 to move the position of the tip of the sample dispensing probe 111b to the first adjustment position 402 illustrated in FIG. 4 (step S303). Here, the first adjustment position 402 is a preset position at which a horizontal distance from the probe cleaner ejection port 207 is more distant than the cleaning position 401 and is lower than the cleaning position 401. When the tip of the sample dispensing probe 111b is at the position and the reference liquid amount of probe cleaner is ejected from the probe cleaner ejection port 207, the liquid level detector 210 detects a liquid level (liquid contact). Since the liquid level detector 210 is already included in the first sample dispensing mechanism 111, a special device that detects a liquid contact is not necessary. The reason why the sample dispensing probe 111b is moved to the first adjustment position 402 in the adjustment of the probe cleaner is that a change in the liquid amount of probe cleaner can be detected sensitively at the first adjustment position 402 downstream of the cleaning position 401, as illustrated in Fig. 4, when the probe cleaner is ejected diagonally downward from the probe cleaner ejection port 207 and has a trajectory drawn in a parabola by the gravity.

Thereafter, the controller 118 opens the outer cleaning solenoid valve 209 to predetermined openness and operates the probe cleaner supply pump 208 to start ejection of the probe cleaner from the probe cleaner ejection port 207 (step S304). At this time, the controller 118 acquires information detected by the liquid level detector 210 that is a probe cleaner detection means (step S305). Further, based on the information acquired from the liquid level detector 210, the controller 118 checks whether the liquid level is detected, that is, whether there is the probe cleaner at the tip of the sample dispensing probe 111b (step S306).

When the liquid level is not detected in step S306, the liquid amount of probe cleaner is insufficient. Accordingly, the controller 118 gradually increases the liquid amount of probe cleaner by gradually increasing the openness of the outer cleaning solenoid valve 209 that is the liquid amount adjustment means until the liquid level detector 210 detects the liquid level (step S307). The openness of the outer cleaning solenoid valve 209 may be increased continuously or may be increased step by step.

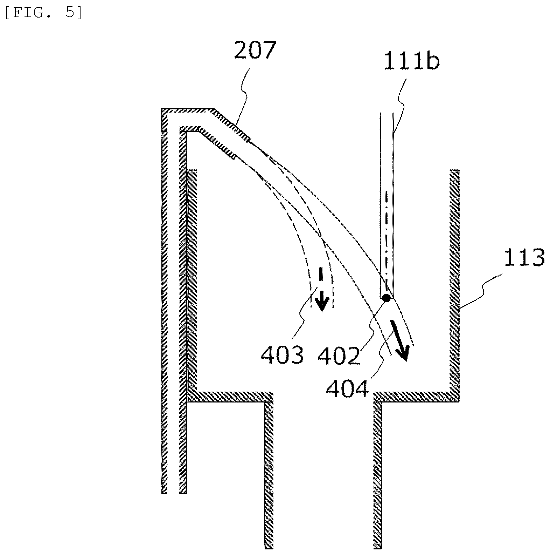

Fig. 5 is a diagram illustrating a change in a trajectory of the probe cleaner when the liquid amount adjustment means increases a liquid amount of probe cleaner in a state where the tip of the dispensing probe is kept at the first adjustment position. When the liquid amount of probe cleaner is insufficient, the probe cleaner ejected from the probe cleaner ejection port 207 loses a force midway, as indicated by an arrow 403 of Fig. 5, and does not contact the tip of the sample dispensing probe 111b at the first adjustment position 402. However, in step S307, when the controller 118 increases the openness of the outer cleaning solenoid valve 209, the liquid amount of probe cleaner per unit time increases, the probe cleaner ejected from the probe cleaner ejection port 207 changes, as indicated by an arrow 404 of Fig. 5, and contacts the tip of the sample dispensing probe 111b at the first adjustment position 402.

Conversely, when the liquid level is detected in step S306, the controller 118 moves the tip of the sample dispensing probe 111b to a position higher than the first adjustment position 402 by operating the first sample dispensing mechanism 111 (step S308). Each time the sample dispensing probe 111b is raised, the controller 118 acquires the information detected by the liquid level detector 210 (step S309) and checks whether the liquid level is not detected (step S310). When the liquid level is still detected in step S310, the operation returns to step S308 and the sample dispensing probe 111b is further raised. The operation from steps S308 to S310 is repeated until the liquid level is not detected.

Here, by causing a movement speed of the sample dispensing probe 111b in step S308 to be slower than a movement speed during cleaning, it is possible to accurately determine a timing at which the liquid level detector 210 does not detect the liquid level. A height of the sample dispensing probe 111b may be raised continuously or may be raised step by step (for example, for each pulse).

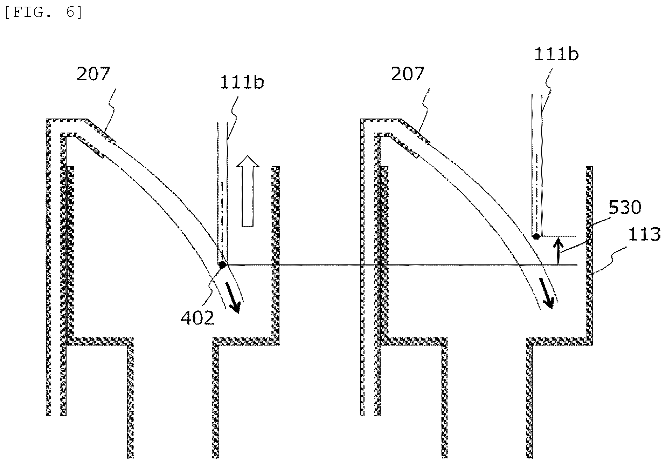

Fig. 6 is a diagram illustrating a state (left) where the tip of the dispensing probe is at the first adjustment position and a state (right) where the dispensing probe is raised until a liquid level is not detected. A movement amount 530 in Fig. 6 corresponds to a height (rise amount) by which the sample dispensing probe 111b is raised from the first adjustment position 402 to a height at which the liquid level detector 210 does not detect the liquid level.

When the liquid level is not detected in step S310, the controller 118 determines a setting (of liquid amount adjustment means) required to set the liquid amount of probe cleaner to the reference liquid amount based on the movement amount 530 from the first adjustment position (step S311). The setting of the liquid amount adjustment means relates to, for example, openness of the outer cleaning solenoid valve 209 and includes an application current value for setting the outer cleaning solenoid valve 209 to the openness. When a setting value is determined, the controller 118 refers to a correspondent relation that is recorded in advance as a table on a memory and is a relation between the movement amount 530 of the sample dispensing probe 111b and a setting value (for example, an application current value) of the outer cleaning solenoid valve 209 required to set the liquid amount of probe cleaner to the reference liquid amount. The movement amount 530 used to determine the setting value may not be an actual distance by which the sample dispensing probe 111b is raised and may be the number of pulses corresponding to the distance.

When the setting value is determined, the controller 118 adjusts the openness by reflecting the setting value in the outer cleaning solenoid valve 209 and records the setting value on the memory. Thereafter, the controller 118 sets the outer cleaning solenoid valve 209 to a fully closed state to complete the adjustment of the liquid amount (step S312). Further, the controller 118 operates the first sample dispensing mechanism 111 to move the position of the tip of the sample dispensing probe 111b to the cleaning position 401 (step S313). Finally, the controller 118 transitions to a standby state (step S314) and ends the liquid amount adjustment mode (step S315).

As described above, when the probe cleaner can be detected in a state where the tip of the sample dispensing probe 111b is located at the first adjustment position 402, the liquid contact of the probe cleaner can also be guaranteed when the tip of the sample dispensing probe 111b is at the cleaning position 401. However, the liquid amount of probe cleaner cannot be said to be the reference liquid amount that is an appropriate (normal) amount. That is, the liquid amount of probe cleaner is likely to be a minimum (quasi-normal) amount to the degree that the liquid barely contacts the tip of the sample dispensing probe 111b or is likely to be an excessive amount to the degree that the liquid contacts the sample dispensing probe 111b above beyond a predetermined height range. In particular, when the liquid amount of probe cleaner is excessive, a droplet may remain at the tip of the sample dispensing probe 111b and is likely to affect analysis accuracy. Accordingly, in this example, by raising the sample dispensing probe 111b from the first adjustment position 402 and identifying a timing at which the probe cleaner is not detected, it is possible to determine the setting of the outer cleaning solenoid valve 209 for obtaining an appropriate amount of probe cleaner.

When maintenance for adjusting the liquid amount according to this example is frequently performed, the liquid amount of probe cleaner is highly likely to be at least quasi-normal even when a state where the liquid amount of probe cleaner is not normal (reference liquid amount) occurs. In this case, the probe cleaner is highly likely to be detected even when the tip of the sample dispensing probe 111b is located at the first adjustment position 402. Accordingly, steps S306 and S307 of Fig. 3 may be omitted.

In this example, the tip of the sample dispensing probe 111b is moved to the cleaning position 401 (step S302) before movement to the first adjustment position 402 (step S303), but may be moved to the first adjustment position 402 without passing through the cleaning position 401. That is, step S302 may be omitted.

### Example 2

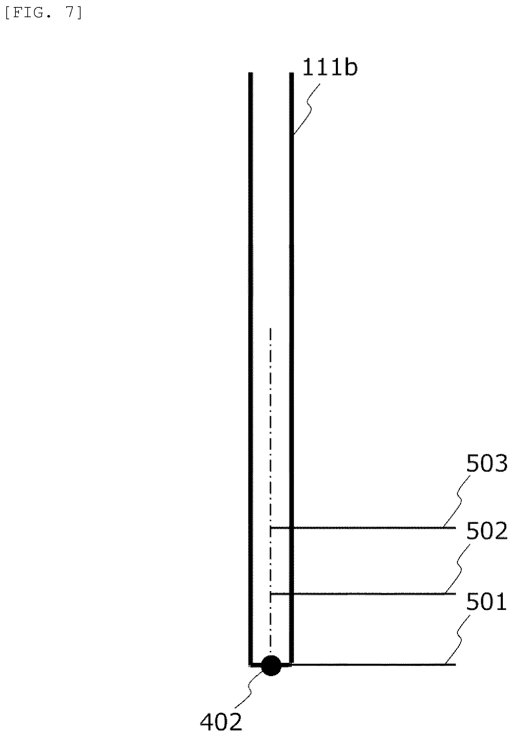

Example 2 will be described with reference to Figs. 7 to 9. In this example, a liquid amount state is evaluated to four stages by determining at which stage the degree of liquid contact of the probe cleaner with respect to the sample dispensing probe 111b is among four stages, and a setting of the liquid amount adjustment means is determined based on a result of the evaluation.

Fig. 7 is a diagram illustrating an example of each boundary line serving as a reference for distinguishing the degree of liquid contact. As illustrated in Fig. 7, in a state where the tip of the sample dispensing probe 111b is at the first adjustment position 402, a position of the tip is a first boundary line 501, a position higher by a predetermined height than the first boundary line 501 is a second boundary line 502, and a position higher by a predetermined height than the second boundary line 502 is a third boundary line 503.

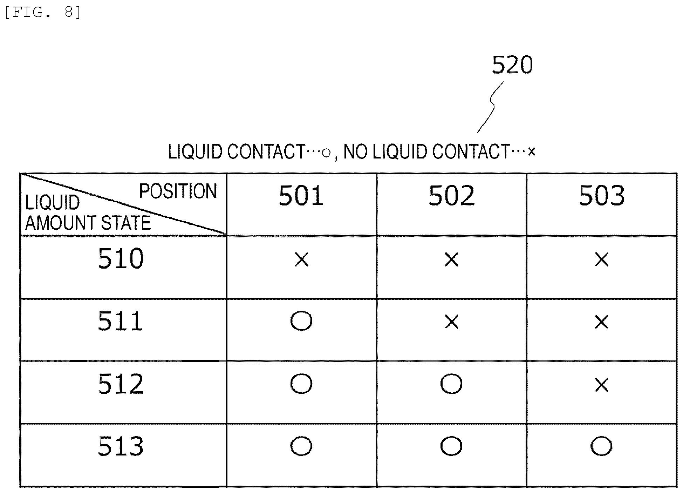

Fig. 8 is a degree-of-liquid contact table showing an example of a correspondent relation between a liquid amount state and liquid contact presence or absence information in each boundary line illustrated in Fig. 7. According to a degree-of-liquid contact table 520 of Fig. 8, a liquid amount state can be evaluated at the following four stages. First, when the probe cleaner does not contact all the boundary lines, the liquid amount state is evaluated to be in the insufficient range 510. Subsequently, when the probe cleaner contacts the first boundary line 501 and does not contact the other boundary lines, a liquid contact region of the dispensing probe is narrow and the liquid amount state is evaluated to be in a quasi-normal range 511. Further, when the probe cleaner contacts the first boundary line 501 and the second boundary line 502 and does not contact the third boundary line 503, the liquid amount state is evaluated to be in a normal range 512. When the probe cleaner contacts all the boundary lines, the liquid amount state is evaluated to be in the excessive range 513. The above-described reference liquid amount is included in the normal range 512.

Here, a method of determining whether the probe cleaner contacts each boundary line will be described. First, as in step S306 of Example 1, a liquid contact to the first boundary line 501 is determined according to whether the liquid level detector 210 can detect the probe cleaner in a state where the tip of the sample dispensing probe 111b is located at the first adjustment position 402. when the probe cleaner is not detected at this time, it can be understood that the probe cleaner does not contact the first boundary line 501 and does not contact the other boundary lines either.

Subsequently, when the probe cleaner contacts the first boundary line 501, the sample dispensing probe 111b is raised as in steps S308 to S310 of Example 1 and the movement amount 530 from the first adjustment position 402 until the probe cleaner is not detected is identified. When the movement amount 530 is less than a height from the first boundary line 501 to the second boundary line 502, the probe cleaner does not contact the second boundary line 502. Conversely, when the movement amount 530 is equal to or greater than the height from the first boundary line 501 to the second boundary line 502, the probe cleaner contacts the second boundary line 502. Further, when the movement amount 530 is less than a height from the first boundary line 501 to the third boundary line 503, the probe cleaner does not contact the third boundary line 503. Conversely, when the movement amount 530 is equal to or greater than the height from the first boundary line 501 to the third boundary line 503, the probe cleaner contacts the third boundary line 503.

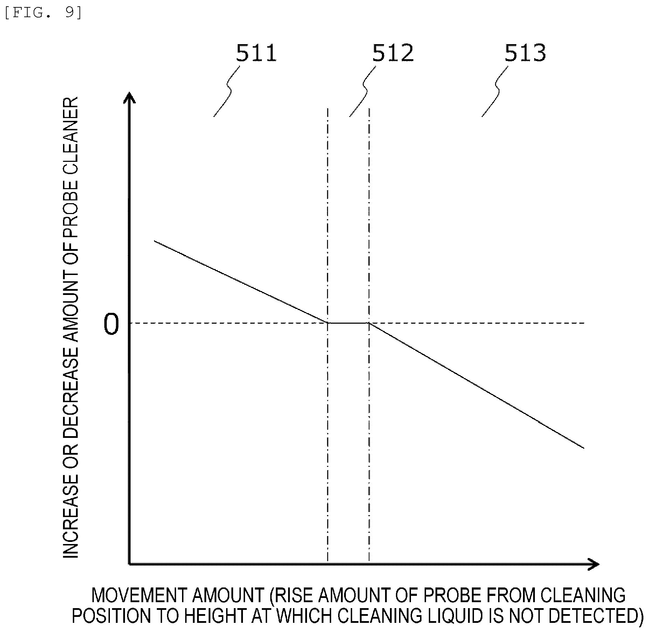

Fig. 9 is a graph illustrating a relation between a movement amount until liquid contact is not made and an increase or decrease amount necessary for setting a probe cleaner to a reference liquid amount. The graph of Fig. 9 is recorded in advance on a memory so that the controller 118 can refer to the graph in the adjustment of the liquid amount. The vertical axis of Fig. 9 represents an increase or decrease amount of the probe cleaner and may be a setting value of the liquid amount adjustment means performed to obtain the increase or decrease amount.

As illustrated in Fig. 9, when the movement amount 530 until the liquid contact is not made is small and evaluated to be in the quasi-normal range 511, the controller 118 sets the openness of the outer cleaning solenoid valve 209 so that the openness increases and increases a liquid amount of probe cleaner. Conversely, when the movement amount 530 until the liquid contact is not made is large and evaluated to be in the excessive range 513, the controller 118 sets the openness of the outer cleaning solenoid valve 209 so that the openness decreases and decreases the liquid amount of probe cleaner. When the movement amount 530 until the liquid contact is not made is between the above two movement amounts and evaluated to be in the normal range 512, the openness of the outer cleaning solenoid valve 209 is not changed, and the liquid amount of probe cleaner does not increase or decrease.

In this example, the movement amount 530 until the liquid contact is not made is identified. However, the liquid amount state may be evaluated by merely determining whether the liquid contact is made in three lines of the first boundary line 501, the second boundary line 502, and the third boundary line 503 without identifying the movement amount 530. In this case, the controller 118 checks whether the liquid contact is made at the first adjustment position 402 corresponding to the height of the first boundary line 501, and then moves the tip of the sample dispensing probe 111b to the second adjustment position corresponding to the height of the second boundary line 502 and checks whether the liquid contact is made at the second adjustment position. Thereafter, the controller 118 moves the tip of the sample dispensing probe 111b to the third adjustment position corresponding to the height of the third boundary line 503 and checks whether the liquid contact is made at the third adjustment position. Then, the controller 118 can determine the degree of liquid contact of four stages in a relative short time by comparing the check result at the first adjustment position 402, the second adjustment position, and the third adjustment position with the degree-of-liquid contact table of Fig. 8.

### Example 3

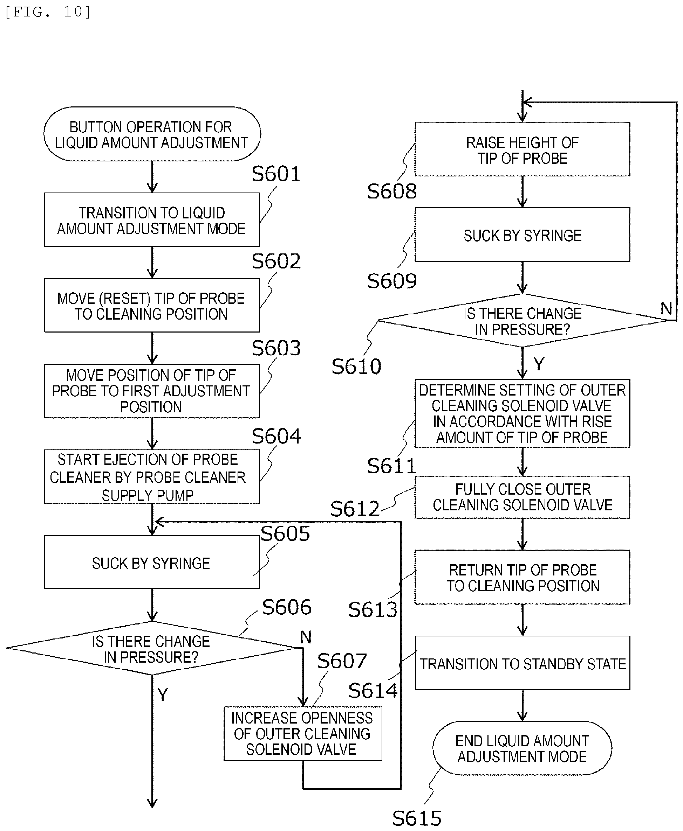

Example 3 will be described with reference to Fig. 10. Fig. 10 is a flowchart illustrating a method of adjusting a liquid amount of probe cleaner in an automated analyzer according to Example 3. In the above-described Example 1, the liquid level detector 210 is used as the probe cleaner detection means. In this example, a pressure sensor 204 is used as the probe cleaner detection means. Since the pressure sensor 204 is already included in the first sample dispensing mechanism 111, a special device that detects a liquid contact is not necessary.

First, since steps S601 to S604 are the same as steps S301 to S304 of Example 1, description thereof will be omitted.

In this example, in step S605, the controller 118 operates the sample syringe 122 to perform sucking. The sucking of the sample syringe 122 may be intermittent, but continuous sucking is preferable since an adjustment time can be shortened.

Subsequently, based on whether there is a change in a pressure detected by the pressure sensor 204, the controller 118 checks whether the liquid contact is made, that is, whether there is a probe cleaner at the tip of the sample dispensing probe 111b (step S606). When there is no change in the pressure in step S606, the liquid contact is not made, and thus the operation proceeds to step S607. Conversely, when there is the change in the pressure in step S606, the liquid contact is made, and thus the operation proceeds to step S608. Since steps S607 and S608 are the same as steps S307 and S308 of Example 1, description thereof will be omitted.

Thereafter, the controller 118 operates the sample syringe 122 to perform sucking while raising the sample dispensing probe 111b (step S609) and checks whether there is a change in the pressure by the pressure sensor 204 (step S610). When there is no change in the pressure in step S610, the liquid contact is still made, and thus the operation returns to step S608. Conversely, when there is the change in the pressure in step S610, the liquid contact is not made, and thus the operation proceeds to step S611. Since steps S611 to S615 are the same as steps S311 to S315 of Example 1, description thereof will be omitted.

### Example 4

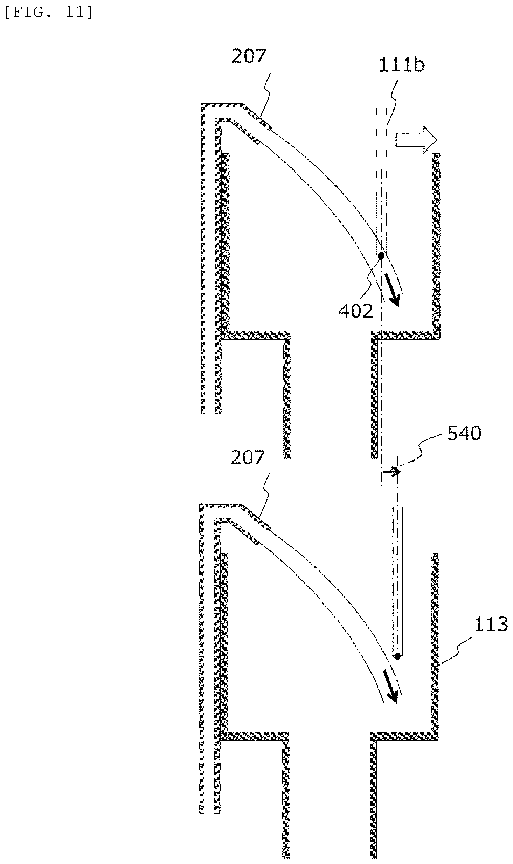

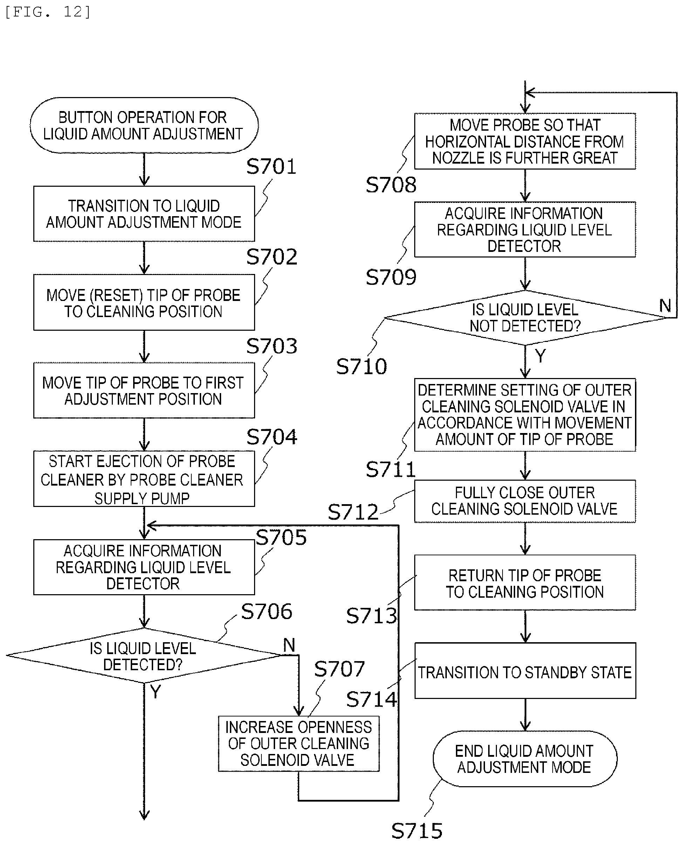

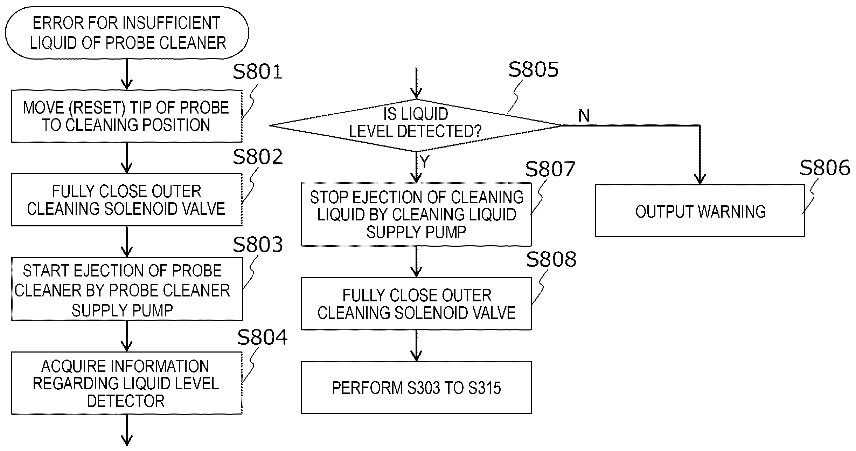

Example 4 will be described with reference to Figs. 11 and 12. In Examples 1 to 3 described above, the tip of the sample dispensing probe 111b is moved above higher than the first adjustment position 402 and the liquid amount of probe cleaner is adjusted based on the movement amount until the liquid contact is not made. In this example, the sample dispensing probe 111b is moved so that the horizontal distance from the probe cleaner ejection port 207 is more distant than the first adjustment position 402, and the liquid amount of probe cleaner is adjusted based on the movement amount until the liquid contact is not made.

Fig. 11 is a diagram illustrating a state (upper) where the tip of the dispensing probe is at the first adjustment position and a state (lower) where the dispensing probe is away from a cleaning nozzle until a liquid level is not detected. A movement amount 540 in Fig. 11 corresponds to a movement amount in which the sample dispensing probe 111b is moved horizontally to a position at which the liquid level detector 210 does not detect a liquid level downstream of the cleaning nozzle from the first adjustment position 402.

Fig. 12 is a flowchart illustrating a method of adjusting a liquid amount of probe cleaner in an automated analyzer according to Example 4. First, since steps S701 to S707 are the same as steps S301 to S307 of Example 1, description thereof will be omitted.

In this example, in steps S708 to S710, the sample dispensing probe 111b is moved so that the horizontal distance from the probe cleaner ejection port 207 is distant until the liquid level detector 210 does not detect the liquid level (step S708).

Since steps S711 to S715 are the same as steps S311 to S315 of Example 1, description thereof will be omitted.

### Example 5

Example 5 will be described with reference to Fig. 13. Fig. 13 is a flowchart illustrating a process in an error for an insufficient liquid of probe cleaner in an automated analyzer according to Example 5. In Examples 1 to 4 described above, checking and adjustment of a liquid amount in the maintenance mode performed periodically are assumed. In this example, a process is performed when a state in which the liquid amount of probe cleaner is insufficient actually occurs and an error is output.

A reason why the liquid amount of probe cleaner is insufficient may be that it is not possible to increase a liquid amount of probe cleaner to the reference liquid amount even when the liquid amount is maximized by the probe cleaner amount adjustment means (for example, even when the openness of the outer cleaning solenoid valve 209 is fully opened) depending on a curve of the sample dispensing probe 111b or the degree of clogging of the probe cleaner ejection port 207. In this case, it is necessary to take countermeasures other than adjustment of the liquid amount, such as exchange of the sample dispensing probe 111b. That is, when the liquid amount of probe cleaner is insufficient, the liquid amount of probe cleaner cannot be adjusted to the reference liquid amount even though the liquid amount is adjusted as described in Examples 1 to 4 described above, and a time of the adjustment is likely to be wasted.

Accordingly, when an error for the insufficient liquid of probe cleaner is output, before adjusting the liquid amount of probe cleaner, the controller 118 according to this example first causes the outer cleaning solenoid valve 209 to be fully opened as the openness, ejects the probe cleaner from the probe cleaner ejection port 207, and checks whether the liquid level detector 210 detects the liquid level. When the liquid level detector 210 does not detect the liquid level, the controller 118 can prompt for countermeasures other than the adjustment of the liquid amount in an early stage by outputting a warning. Conversely, when the liquid level detector 210 detects the liquid level, the liquid amount of probe cleaner can increase up to the reference liquid amount. Therefore, the liquid amount is adjusted similarly in Examples 1 to 4 described above. Hereinafter, an example will be described specifically with reference to Fig. 13.

First, when an error for the insufficient liquid of probe cleaner is output, the controller 118 operates the first sample dispensing mechanism 111 to move a position of the tip of the sample dispensing probe 111b to the cleaning position 401 and resets the position of the sample dispensing probe 111b (step S801).

Subsequently, the controller 118 fully opens the outer cleaning solenoid valve 209 as openness (step S802) and operates the probe cleaner supply pump 208 to start ejecting the probe cleaner (step S803). At this time, the controller 118 acquires information detected by the liquid level detector 210 (step S804). Further, the controller 118 checks whether the liquid level is detected based on the information acquired from the liquid level detector 210 (step S805).

When the liquid level is not detected in step S805, a defect that requires exchange of the sample dispensing probe 111b or the like is likely to occur. Therefore, the controller 118 outputs a warning (step S808).

Conversely, when the liquid level is detected in step S805, the controller 118 stops ejecting the probe cleaner by the probe cleaner supply pump 208 (step S807) and fully closes the outer cleaning solenoid valve 209 (step S808). Thereafter, similar processes to steps S303 to S315 of Example 1 are performed.

Each of the above-described examples has been described in detail to facilitate understanding of the present invention and the configurations described above may not be all included. Some of the configurations of a certain example can be replaced with or can be added to the configurations of another example.

Further, the present invention is not limited to each of the above-described examples and various modifications can be made. For example, in each of the above-described examples, the cases where a liquid amount of probe cleaner is adjusted for the sample dispensing probe 111b have been described, but each of the above-described examples can also be applied to a case where a liquid amount of probe cleaner is adjusted for the reagent dispensing probe 120. In each of the above-described examples, the liquid amount of probe cleaner has been adjusted in accordance with the openness of the outer cleaning solenoid valve 209, but may be adjusted in accordance with the number of rotations of the probe cleaner supply pump 208. By increasing the number of rotations, it is possible to increase an ejection amount of probe cleaner per unit time or by decreasing the number of rotations, it is possible to decrease the ejection amount. In addition, another liquid amount adjustment means may be used as long as a liquid amount of probe cleaner per unit time ejected from the tip of the sample dispensing probe 111b can be adjusted.

### Reference Signs List

- 100:: automated analyzer
- 101:: reaction disc
- 102:: reaction container
- 103:: cleaning mechanism
- 104:: spectrophotometer
- 105:: agitation mechanism
- 106:: cleaning tank (for agitation mechanism)
- 107:: first reagent dispensing mechanism
- 107a:: second reagent dispensing mechanism
- 108:: cleaning tank (for reagent dispensing mechanism)
- 109:: reagent disc
- 110:: reagent bottle
- 111:: first sample dispensing mechanism
- 111a:: second sample dispensing mechanism
- 111b:: sample dispensing probe
- 112:: detergent bottle
- 113:: cleaning tank (for sample dispensing mechanism)
- 115:: sample container
- 116:: sample rack
- 117:: sample transport mechanism
- 118:: controller
- 120:: reagent dispensing probe
- 121:: reagent syringe
- 122:: sample syringe
- 201:: tube
- 203:: nipple
- 204:: pressure sensor
- 205:: upper opening
- 206:: lower opening
- 207:: probe cleaner ejection port
- 208:: probe cleaner supply pump
- 209:: outer cleaning solenoid valve
- 210:: liquid level detector
- 211:: liquid feeding pump
- 212:: inner cleaning solenoid valve
- 401:: cleaning position
- 402:: first adjustment position
- 501:: first boundary line
- 502:: second boundary line
- 503:: third boundary line
- 510:: insufficient range
- 511:: quasi-normal range
- 512:: normal range
- 513:: excessive range
- 520:: degree-of-liquid contact table
- 530:: movement amount (rise amount)
- 540:: movement amount (horizontal movement amount)

## Claims

1. An automated analyzer comprising:
a dispensing mechanism including a dispensing probe that dispenses a sample or a reagent into a reaction container;
a cleaning nozzle configured to eject a probe cleaner to an outer surface of the dispensing probe;
a liquid amount adjustment means configured to adjust a liquid amount of probe cleaner ejected from the cleaning nozzle;
a probe cleaner detection means provided in the dispensing mechanism and configured to detect a liquid contact to the dispensing probe; and
a control unit configured to control the dispensing mechanism, the liquid amount adjustment means, and the probe cleaner detection means,
wherein, during cleaning of the dispensing probe, the control unit ejects a reference liquid amount of probe cleaner from the cleaning nozzle in a state where a tip of the dispensing probe is at a cleaning position, and
wherein, in a case where a first adjustment position is a position at which a horizontal distance from the cleaning nozzle is more distant than the cleaning position, which is lower than the cleaning position, and at which the probe cleaner detection means detects the liquid contact during ejection of the reference liquid amount of probe cleaner from the cleaning nozzle when a tip of the dispensing probe is at the position,
in the adjustment of the liquid amount of probe cleaner, after the control unit ejects the probe cleaner from the cleaning nozzle to check whether the probe cleaner detection means has detected the liquid contact in a state where the tip of the dispensing probe is at the first adjustment position,
the control unit ejects the probe cleaner from the cleaning nozzle to check whether the probe cleaner detection means has detected the liquid contact in a state where the tip of the dispensing probe is at a position above the first adjustment position or a position at which the horizontal distance from the cleaning nozzle is more distant than the first adjustment position, and
the control unit determines a setting of the liquid amount adjustment means required to set a liquid amount of probe cleaner to the reference liquid amount based on check results.

2. The automated analyzer according to claim 1, wherein, in the adjustment of the liquid amount of probe cleaner, the control unit moves the tip of the dispensing probe toward an upper side or so that the horizontal distance from the cleaning nozzle is more distant until the probe cleaner detection means does not detect the liquid contact, and determines the setting of the liquid amount adjustment means based on a movement amount from the first adjustment position.

3. The automated analyzer according to claim 2,
wherein, when the movement amount is within in a quasi-normal range, the control unit causes the liquid amount adjustment means to increase the liquid amount of probe cleaner,
wherein, when the movement amount is within a normal range larger than the quasi-normal range, the control unit does not change the liquid amount of probe cleaner, and
wherein, when the movement amount is within an excessive range larger than the normal range, the control unit decreases the liquid amount of probe cleaner.

4. The automated analyzer according to claim 1,
wherein, when a position higher by a predetermined height than the first adjustment position or a position at which the horizontal distance from the cleaning nozzle is more distant by a predetermined distance than the first adjustment position is set to a second adjustment position, and
a position further higher by a predetermined height than the second adjustment position or a position at which the horizontal distance from the cleaning nozzle is further more distant by a predetermined distance than the second adjustment position is set to a third adjustment position,
in the adjustment of the liquid amount of probe cleaner, after the control unit ejects the probe cleaner from the cleaning nozzle to check whether the probe cleaner detection means has detected the liquid contact in a state where the tip of the dispensing probe is at the second adjustment position,
the control unit ejects the probe cleaner from the cleaning nozzle to check whether the probe cleaner detection means has detected the liquid contact in a state where the tip of the dispensing probe is at the third adjustment position,
the control unit determines one of degrees of liquid contact of four stages from check results at the first, second, and third adjustment positions, and
the control unit determines the setting of the liquid amount adjustment means based on the determined degree of liquid contact.

5. The automated analyzer according to claim 4, wherein the degrees of liquid contact of four stages is a insufficient range in a case where no liquid contact is detected at all the adjustment positions, a quasi-normal range in a case where the liquid contact is detected at only the first adjustment position, a normal range in a case where the liquid contact is detected at the first and second adjustment positions, and an excessive range in a case where the liquid contact is detected in all the adjustment positions.

6. The automated analyzer according to claim 1, wherein, when the probe cleaner detection means does not detect the liquid contact at the first adjustment position, the control unit causes the liquid amount adjustment means to increase the liquid amount of probe cleaner until the probe cleaner detection means detects the liquid contact.

7. The automated analyzer according to claim 1, wherein, before the adjustment of the probe cleaner, the control unit causes the liquid amount adjustment means to maximize the liquid amount in a state where the tip of the dispensing probe is located at the cleaning position, ejects the probe cleaner from the cleaning nozzle, and checks whether the probe cleaner detection means has detected the liquid contact, and outputs a warning when the probe cleaner has not detected the liquid contact.

8. The automated analyzer according to claim 1, wherein, in the adjustment of the liquid amount of probe cleaner, a speed at which the tip of the dispensing probe moves to a position above from the first adjustment position or a speed at which the tip of the dispensing probe moves to a position at which the horizontal distance from the cleaning nozzle is more distant than the first adjustment position is slower than a speed at which the tip of the dispensing probe moves during the cleaning of the dispensing probe.

9. A method of adjusting a liquid amount of probe cleaner of an automated analyzer that includes a dispensing probe that dispenses a sample or a reagent, a cleaning nozzle that ejects a probe cleaner to an outer surface of the dispensing probe, a probe cleaner detection means for detecting a liquid contact to the dispensing probe, and a control unit that cleans the dispensing probe by ejecting a reference liquid amount of probe cleaner from the cleaning nozzle in a state where a tip of the dispensing probe is at a cleaning position, the method comprising: in a case where a first adjustment position is a position at which a horizontal distance from the cleaning nozzle is more distant than the cleaning position, which is lower than the cleaning position, and at which the probe cleaner detection means detects the liquid contact during ejection of the reference liquid amount of probe cleaner from the cleaning nozzle when the tip of the dispensing probe is at the position,
a step in which the control unit ejects the probe cleaner from the cleaning nozzle to check whether the probe cleaner detection means has detected the liquid contact in a state where the tip of the dispensing probe is at the first adjustment position;
a step in which the control unit ejects the probe cleaner from the cleaning nozzle to check whether the probe cleaner detection means has detected the liquid contact in a state where the tip of the dispensing probe is at a position above the first adjustment position or a position at which the horizontal distance from the cleaning nozzle is more distant than the first adjustment position; and
a step in which the control unit determines a setting of a liquid amount adjustment means required to set a liquid amount of probe cleaner to the reference liquid amount based on check results.
